Europäisches Patentamt

European Patent Office

Office européen des brevets

(19)

(11) Numéro de publication : **0 044 235**
**B1**

(12)

# FASCICULE DE BREVET EUROPÉEN

(45) Date de publication du fascicule du brevet :
30.01.85

(51) Int. Cl.⁴ : **G 01 S 13/52**

(21) Numéro de dépôt : **81400996.5**

(22) Date de dépôt : **19.06.81**

(54) **Dispositif de détection de cibles mobiles dans un système radar et radar comportant un tel dispositif.**

(30) Priorité : **16.07.80 FR 8015685**

(43) Date de publication de la demande :
**20.01.82 Bulletin 82/03**

(45) Mention de la délivrance du brevet :
**30.01.85 Bulletin 85/05**

(84) Etats contractants désignés :
**DE GB IT NL SE**

(56) Documents cités :
**FR-A- 2 241 077**
**US-A- 2 876 446**
**US-A- 4 093 989**
**IEEE NEREM 74 PROCEEDINGS, présenté au NEREM 74, 29-31 octobre 1974, Boston, New York, US C.E. MUEHE: "Digital signal processor for air traffic control radars", pages 73-82**
**IEEE 1978 NATIONAL AEROSPACE AND ELEC-TRONICS CONFERENCE, NAE CON 78, présenté à DAYTON CONVENTION CENTER 16-18 mai 1978 New York, US P. KERNAN: "Moving target detector (MTD) performance with long range radars"**
**INTERNATIONAL CONFERENCE RADAR 77, pré-senté à Londres, 25-28 octobre 1977, publié par INSTITUTION OF ELECTRONIC ENGINEERS, Lon-dres, GB C.E. MUEHE et al. "The parallel micropro-grammed processor (PMP)"**

(73) Titulaire : **THOMSON-CSF**
**173, Boulevard Haussmann**
**F-75379 Paris Cedex 08 (FR)**

(72) Inventeur : **Lepere, Guy**
**THOMSON-CSF SCPI - 173, Bld. Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

## Description

La présente invention est relative à un dispositif de détection de cibles mobiles et son application à un radar de surveillance.

Dans cette application, l'invention concerne plus particulièrement un radar de surveillance d'aéroport (A. S. R. : Airport Surveillance Radar) qui peut alors afficher les échos des cibles mobiles comprenant même celles ayant une vitesse radiale quasi nulle et éliminer les échos fixes ainsi que les échos parasites étendus en distance et ayant des vitesses de déplacement très faibles, tels la mer ou les nuages. Par échos fixes on entend les signaux reçus par le radar en provenance de cibles fixes comme des immeubles, des collines, des arbres etc... Tous ces signaux parasites seront désignés dans la description sous le nom de « clutter », d'origine anglo-saxonne.

Il existe plusieurs dispositifs de détection de cibles mobiles faisant appel à des techniques de traitement du signal radar classique typiques, qui vont être rappelées brièvement dans ce qui suit. Une première technique, connue sous le vocable anglais Moving Target Indication (MTI) — ou indication de cibles mobiles — a pour but de détecter seulement les échos de cibles mobiles et d'éliminer d'un signal radar les échos fixes. Un inconvénient du MTI est qu'il ne permet pas la détection d'une cible ayant une vitesse radiale nulle ou quasi nulle par rapport au radar, tel un avion volant tangentiellement, l'écho provenant d'une telle cible étant éliminé en même temps que les échos fixes.

Un autre inconvénient du MTI provient des parasites en déplacement qui ne sont pas éliminés et qui gênent l'indication de cibles mobiles. Comme parasites en déplacement, on peut citer celui provoqué par les vagues de la mer et qui a une vitesse Doppler de quelques mètres par seconde ; il y a aussi ceux provoqués par les grands vols d'oiseaux migrateurs et les nuages.

D'autres techniques utilisant un traitement du signal radar réalisé dans le domaine temporel, telle la technique dite LogCFAR (amplification logarithmique et circuit de contrôle du taux de fausse alarme), présentent des inconvénients notamment quand les échos de cibles ne sont pas supérieurs en niveau au parasite mobile.

Pour pallier en partie ces difficultés, il existe un système connu sous le vocable anglais de Moving Target Detector (M. T. D.) — ou détecteur de cibles mobiles — traitant le signal radar dans le domaine fréquentiel pour détecter des cibles en présence de divers parasites.

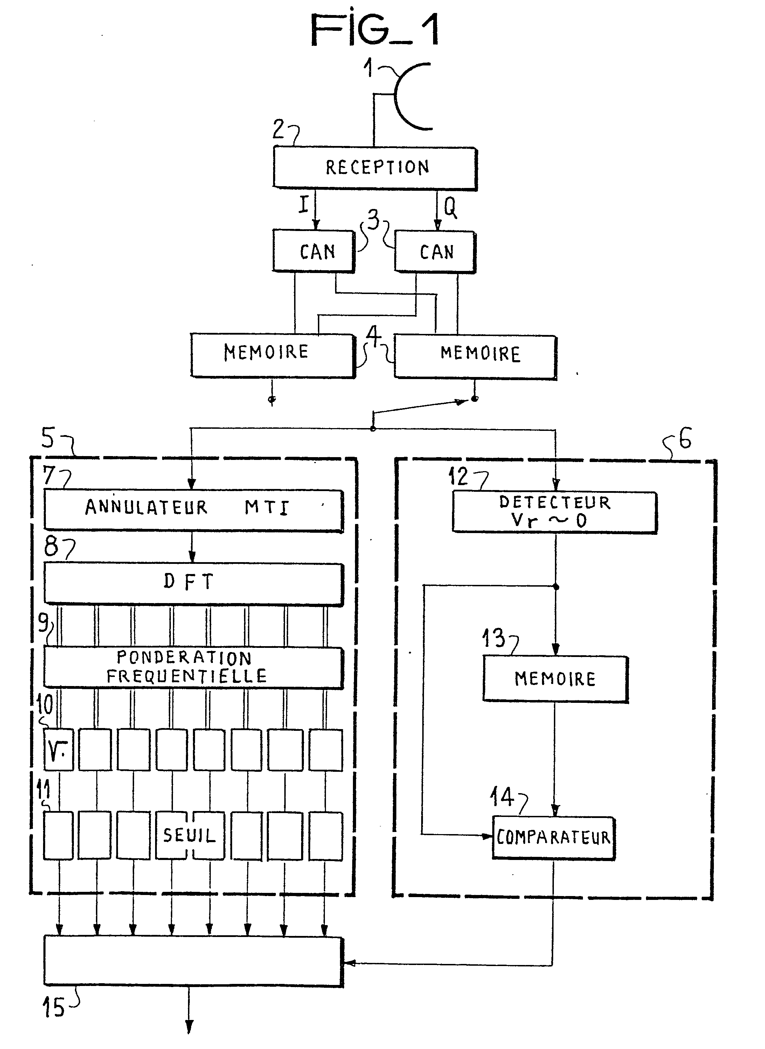

Ce système MTD, qui va être décrit dans la figure 1, utilise un annulateur MTI suivi d'un système de filtrage Doppler par Transformée de Fourier. Toutefois il subsiste une détérioration du rapport signal/bruit pour les échos provenant de cibles se déplaçant en trajectoire tangentielle. Les cibles et parasites ayant une vitesse radiale quasi nulle sont détectés à l'aide d'un dispositif complémentaire comprenant généralement un filtre ne conservant que les échos à vitesse radiale nulle, organisé autour d'une mémoire de masse de très grande capacité.

Une variante de ce système est décrite dans la demande de brevet français publiée 2 306 453, relative à un radar d'indication de cibles mobiles nécessitant un dispositif mémoire beaucoup plus petit que celui nécessaire à un système MTD, réalisable en circuits intégrés et n'utilisant pas d'annulateur MTI. Cependant un inconvénient de ce dernier système est qu'il élimine mal les échos fixes ponctuels, n'étant vraiment efficace que pour les parasites étendus en distance.

La présente invention a pour but de remédier à tous ces divers inconvénients. Elle concerne un dispositif de détection de cibles mobiles dans un système radar comportant une voie classique de réception linéaire des signaux reçus par l'antenne du système radar, délivrant des signaux vidéos bipolaires analogiques, des moyens de conversion de ces signaux en signaux numériques, tel qu'il comporte un dispositif de traitement numérique des signaux vidéo bipolaires dans le domaine temporel et deux dispositifs d'élimination des échos parasites, l'un comprenant un circuit de logique de seuil en distance éliminant les échos à vitesse de déplacement faibles étendus en distance et l'autre comprenant un circuit de logique de seuil de tour d'antenne à tour d'antenne éliminant les échos fixes même ponctuels.

Selon une autre caractéristique de l'invention, le dispositif comporte un système d'asservissement de position de l'antenne radar permettant d'améliorer l'élimination des échos fixes de tour d'antenne à tour d'antenne.

D'autres avantages et caractéristiques de l'invention apparaîtront dans la description qui suit, illustrée par les figures suivantes :

la figure 1   le schéma synoptique d'un système de détection de cibles mobiles, dit MTD selon l'art antérieur ;

la figure 2   le schéma synoptique d'un mode de réalisation de l'invention ;

la figure 3   une voie classique de réception linéaire des signaux reçus par l'antenne radar ;

les figures 4, 5, 6   respectivement un opérateur de rotation, les courbes de réponse des différents filtres constituant l'opérateur de transformée de Fourier et un opérateur de pondération figurant dans le dispositif selon l'invention ;

la figure 7   le schéma d'un dispositif classique de logique de seuil en distance ;

la figure 8   le schéma d'un dispositif de logique de seuil de tour d'antenne à tour d'antenne selon l'invention ;

la figure 9 le schéma synoptique d'un système d'asservissement de la position de l'antenne radar.

La figure 1 représente le schéma synoptique d'un système de détection de cibles mobiles dit MTD. Ce système utilise deux dispositifs de traitement du signal radar, l'un comportant un annulateur MTI suivi d'un dispositif de filtrage fréquentiel et d'un seuil adaptatif en distance situé dans chaque voie vitesse permettant d'éliminer les échos parasites (nuages) et de conserver les cibles de vitesse radiale non nulle, et l'autre dispositif comportant une mémoire à disques magnétiques pour former une « carte des parasites » en mémorisant les composantes de vitesse Doppler nulles pour chacune des régions azimuthales élémentaires considérées et permettant d'effectuer la détection des échos à vitesse radiale quasi nulle.

L'écho reçu par l'antenne 1 passe dans une voie de réception linéaire 2 classique délivrant deux signaux vidéo analogiques I et Q : (l'amplitude A est liée à la surface équivalente des cibles et $\varphi$ représente le déphasage entre l'onde émise par le radar et l'onde reçue par l'antenne)

$$I = A \cos \varphi$$
$$Q = A \sin \varphi$$

Ces deux signaux vidéo I et Q sont les composantes réelle et imaginaire du signal reçu par l'antenne. Le déphasage $\varphi$ varie d'une récurrence à la suivante lorsque l'onde est réfléchie par une cible mobile. Ces signaux vidéo sont échantillonnés et codés numériquement par des convertisseurs analogiques numériques 3, puis mémorisés dans un dispositif commutable de deux mémoires tampon 4 avant d'être analysés dans les deux dispositifs de traitement radar 5 et 6 mentionnés ci-dessus. Le premier dispositif 5, conservant uniquement les échos de vitesse radiale non nulle, traite le signal radar par rafale de 8 récurrences et est constitué tout d'abord par un annulateur MTI 7 qui élimine en partie les échos ayant une vitesse radiale nulle. Le signal radar passe ensuite dans un dispositif de filtrage fréquentiel constitué par un circuit de transformée de Fourier 8 suivi d'un circuit de pondération 9 qui pondère les composantes réelles et imaginaires des fréquences adjacentes délivrées par le circuit 8. Cette pondération permet d'éliminer ou de réduire considérablement les lobes secondaires des 8 filtres passe-bande constituant le circuit 8. Des circuits 10 calculent le module de chaque voie vitesse en élevant au carré les parties réelle et imaginaire puis en prenant la racine carrée de leur somme. Enfin, des circuits 11 de traitement de seuil adaptatif en distance dans chaque voie vitesse permettent d'éliminer les échos étendus en distance qui représentent des parasites et de conserver par conséquent uniquement les échos ponctuels représentant les cibles intéressantes.

Le second dispositif de traitement du signal radar, contrairement au premier, ne s'occupe que des échos dont la vitesse radiale est quasi nulle. C'est pourquoi il comporte d'abord un détecteur 12 de tels échos, un filtre passe-bas par exemple, suivi d'une mémoire 13 à disques magnétiques permettant d'établir la carte du clutter pour toute la zone balayée par le faisceau radar en mémorisant l'amplitude de la vidéo issue du filtre passe bas. Il est alors possible de distinguer les cibles mobiles à vitesse radiale nulle des échos fixes en comparant leur niveau dans le circuit 14.

Une fois les échos mobiles détectés par les deux dispositifs de traitement 5 et 6, on compare leurs niveaux respectifs dans le circuit 15 et on garde le niveau le plus élevé correspondant à la cible mobile intéressante (avion par exemple).

Un inconvénient de ce système MTD est d'une part qu'il nécessite un équipement de mémoire d'une très grande capacité tel un disque magnétique et d'autre part qu'il utilise un annulateur MTI entraînant la détérioration du rapport signal/bruit pour les retours de cibles à partir d'un espace exempt de parasites. La demande de brevet mentionnée auparavant essaie de remédier à ces deux inconvénients mais présente cependant le désagrément de mal éliminer les échos fixes ponctuels.

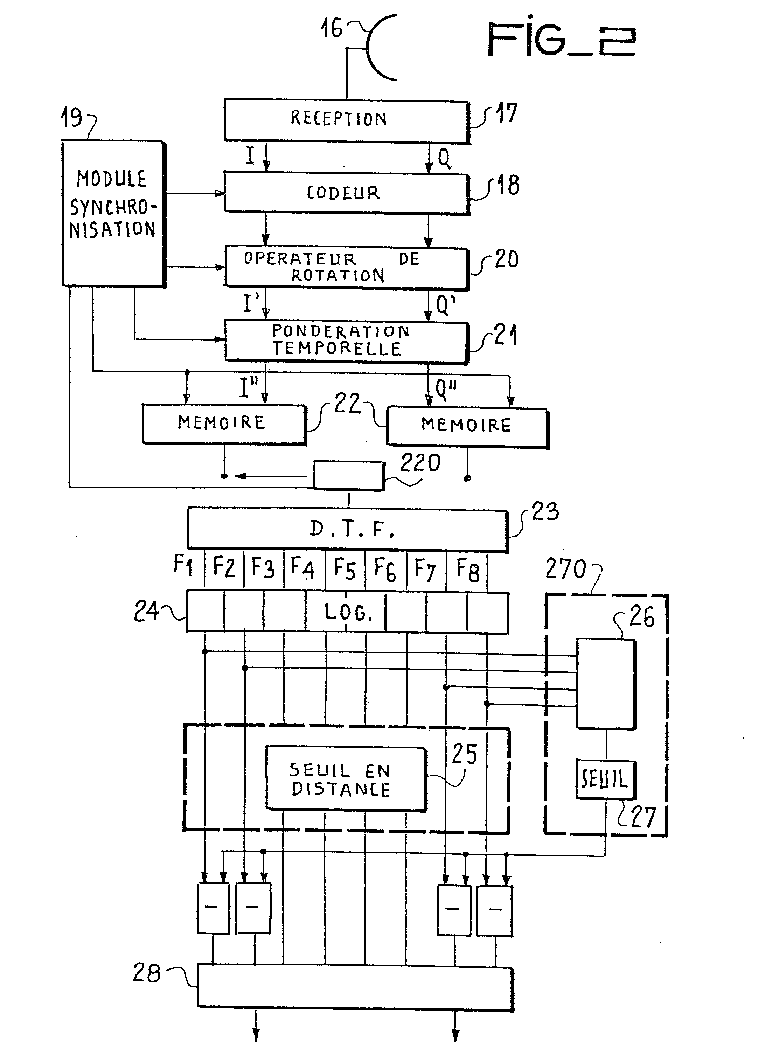

La figure 2 représente le schéma synoptique d'un mode de réalisation de l'invention. Le radar comportant un dispositif de détection des cibles mobiles selon l'invention peut être un radar cohérent piloté par un klystron ou cohéré piloté par un magnétron.

Le radar fonctionne par « paquets » ou rafales c'est-à-dire avec deux périodes de récurrence $PRF_1 = 900$ MS et $PRF_2 = 1\,100$ MS par exemple, de façon à réduire considérablement le problème des vitesses aveugles ; aussi 8 impulsions ou récurrences successives sont émises à la période de 900 $\mu$s et les 8 suivantes à l'autre période. Dans la largeur du faisceau élémentaire d'antenne, 2 et 3 rafales sont émises. D'autre part, le traitement de la vidéo radar a lieu pour chaque case distance et pour chaque rafale.

A titre d'exemple, les paramètres du radar peuvent être :

période de répétition des récurrences : 1 000 $\mu$s en moyenne ;

vitesse de rotation : 10 tours/mn ;

largeur d'une impulsion émise : 0,6 $\mu$s ;

échantillonnage distance : 0,6 $\mu$s ;

émission par paquets ou rafales : 8 impulsions à la période de 900 $\mu$s et 8 impulsions à la période de 1 100 $\mu$s, soit sur 1 tour d'antenne, 750 paquets c'est-à-dire 6 000 récurrences en moyenne.

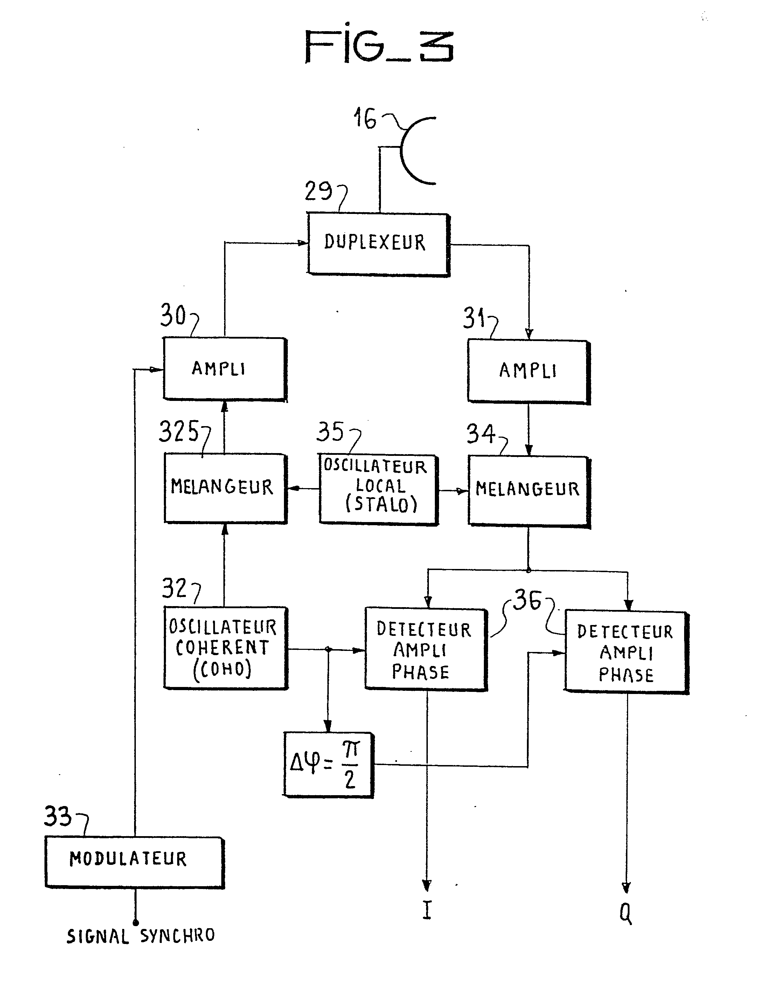

Comme l'indique la figure 2, le dispositif de détection selon l'invention comporte une voie classique de réception linéaire 17 des signaux reçus par l'antenne 16, délivrant deux signaux vidéos bipolaires I et Q. Cette voie de réception fait l'objet de la figure 3. Les signaux I et Q analogiques sont échantillonnés puis convertis numériquement par les codeurs 18 sous forme de mots binaires de 11 bits (1 bit de signe + 10 bits). La fréquence d'échantillonnage $f_e$, qui peut être de 2,5 MHz dans un exemple particulier de réalisation, est délivrée par un module de synchronisation 19.

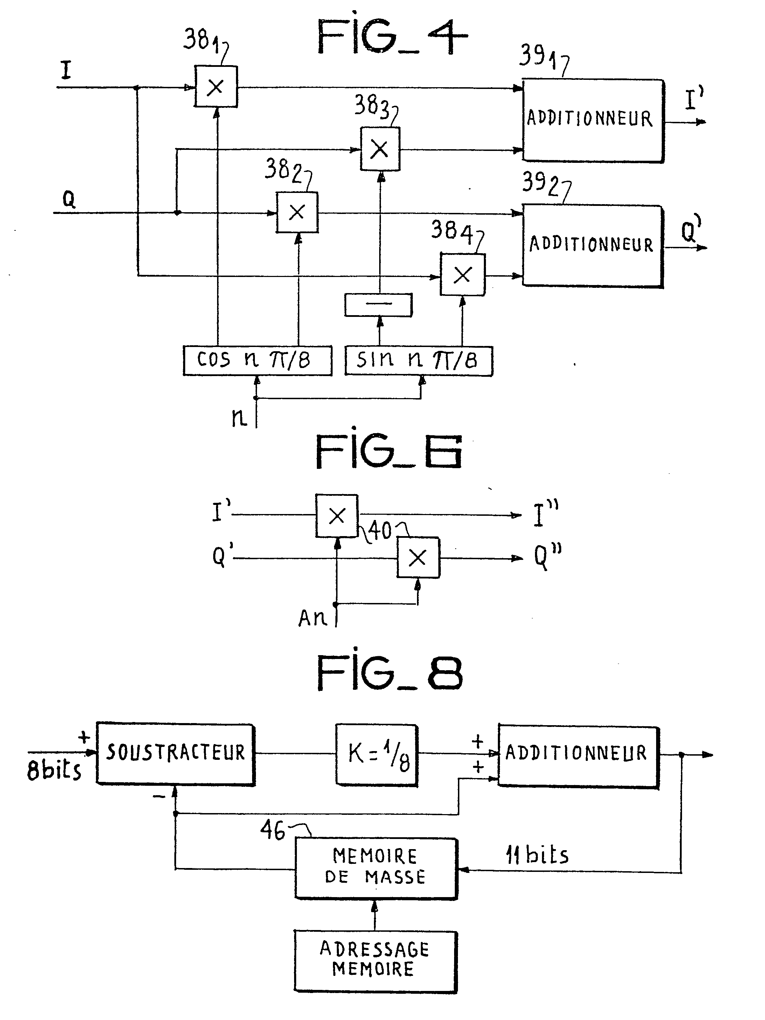

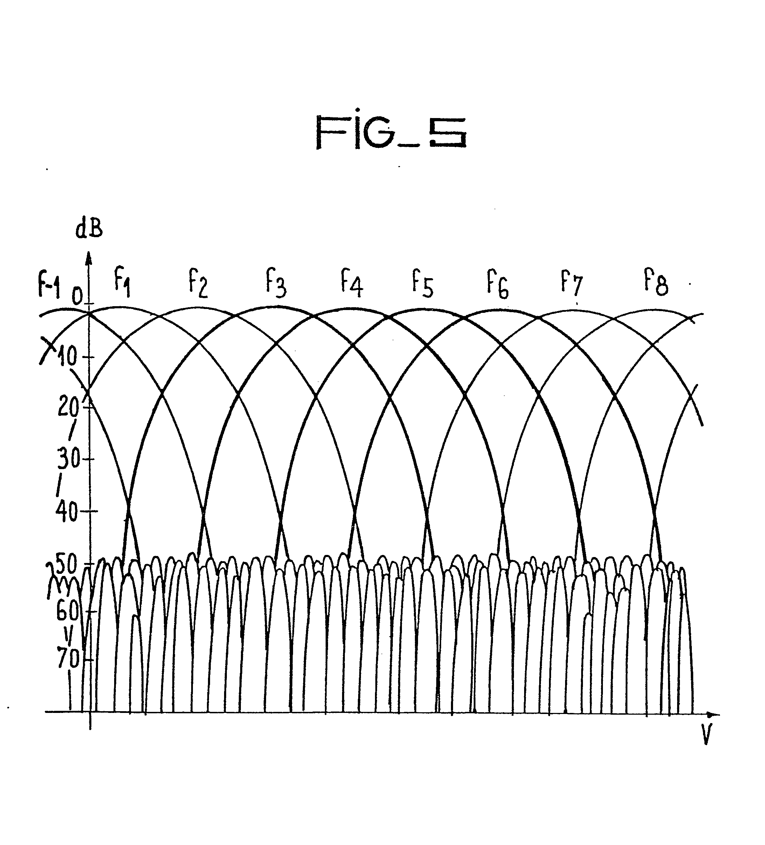

Contrairement au système MTD, la pondération du signal radar a lieu dans le domaine temporel et non fréquentiel, c'est-à-dire que les informations vidéo passent dans un dispositif de pondération avant d'être traitées dans un opérateur de transformée de Fourier. Les signaux vidéo I et Q codés sont décalés dans un opérateur de rotation 20, objet de la figure 4, afin de cadrer les voies vitesses dans l'opérateur de transformée de Fourier comme le montre la figure 5. De plus, afin de réduire les lobes secondaires dus à cet opérateur de Fourier, les signaux I' et Q' sortant de l'opérateur de rotation 20 sont pondérés par un opérateur de pondération 21, décrit sur la figure 6, délivrant deux signaux I'' et Q''. Cette pondération est choisie de façon à obtenir des courbes de réponse des différents filtres constituant l'opérateur de Fourier présentant des lobes secondaires très inférieurs aux lobes principaux — de l'ordre de 50 dB — comme le montre la figure 5. Cela permet d'éliminer totalement le clutter d'échos fixes dans les voies vitesses centrales, sans utiliser de préfiltrage MTI. Cet opérateur de transformée de Fourier réalise un filtrage dans le domaine fréquentiel et permet de réaliser huit filtres de fréquence à partir des informations vidéo contenues dans chaque rafale de huit récurrences. Selon l'invention, les quatre voies centrales $F_3$, $F_4$, $F_5$ et $F_6$ sont utilisées pour détecter les échos mobiles des cibles intéressantes parmi le clutter d'échos à faibles vitesses de déplacement étendu en distance comme le clutter météo par exemple. Les quatre autres voies $F_1$, $F_2$, $F_7$ et $F_8$ sont utilisées pour détecter les cibles mobiles ayant une vitesse radiale Doppler quasi nulle parmi le clutter d'échos fixes, même ponctuels.

Les signaux I'' et Q'' pondérés sont ensuite mémorisés dans un dispositif mémoire permettant de stocker les informations de 8 récurrences. Ce dispositif mémoire est constitué de deux mémoires tampon 22 commutables afin d'écrire les informations d'une rafale dans une mémoire pendant que l'opérateur de transformée de Fourier traite les informations de la rafale précédente stockées dans l'autre mémoire. Pendant une rafale, une des deux mémoire est en acquisition et l'autre en traitement, et la commutation a lieu automatiquement à chaque changement de rafale.

Un commutateur 220 commandé par le module de synchronisation 19 permet de passer d'une mémoire à l'autre.

L'opérateur 23 effectue une transformée de Fourier, du type FFT suivant l'algorithme de Cooley Tukey ou suivant tout autre algorithme décrit dans l'ouvrage de M. Rabiner et M. Gold : « Theory and application of digital signal processing » — Edition Prentice Hall. Cette transformée est réalisée sur les 8 voies vitesses de sorte qu'en sortie de cet opérateur, 8 informations de fréquence soient disponibles à chaque rafale. Le circuit de transformée de Fourier calcule le module de chacune des composantes des 8 voies vitesses $F_1$ à $F_8$, sur 12 bits par exemple, ce module étant transcodé sous forme logarithmique par des circuits 24 afin de réduire le nombre de bits à 8 par exemple.

Suivant les voies vitesses, les signaux passent ensuite à travers deux types de logique de seuil. Comme cela a déjà été dit, les quatre voies centrales $F_3$, $F_4$, $F_5$ et $F_6$ servent à détecter les cibles mobiles parmi le clutter météo et pour cela, comportent une logique de seuil en distance 25 classique dont le but est d'éliminer les échos mobiles étendus en distance, les échos mobiles indiquant la présence de cibles intéressantes étant quasi ponctuels. Par contre, les voies vitesses $F_1$, $F_2$, $F_7$ et $F_8$ comportent une logique de seuil de tour d'antenne à tour d'antenne 270 permettant d'éliminer les échos fixes, même ponctuels.

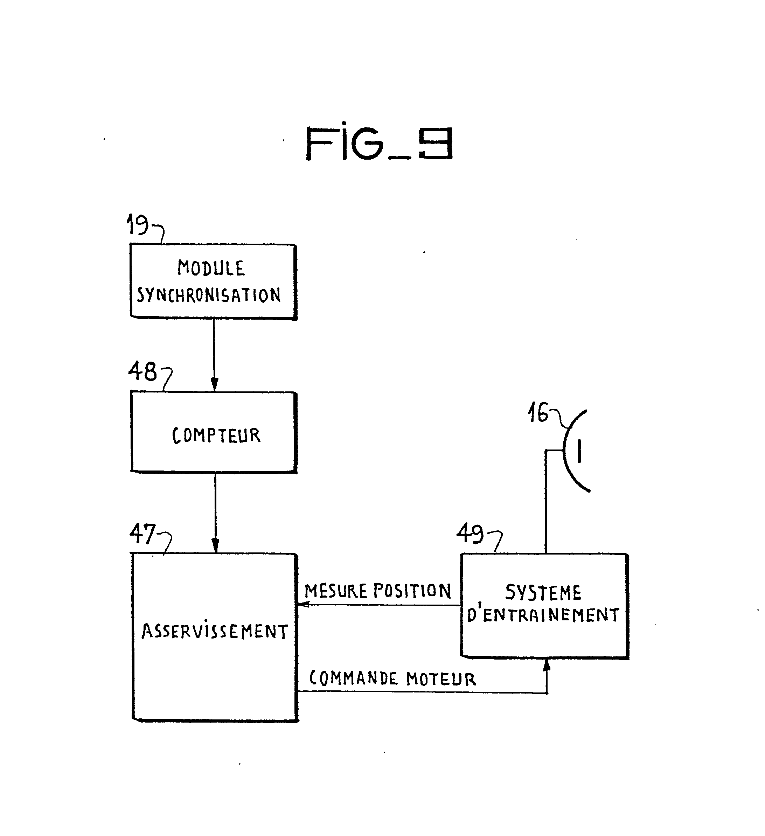

Pour cela, les signaux de ces quatre voies vitesses sont d'abord comparés dans le circuit 26 qui délivre celui ayant le plus haut niveau — correspondant à l'écho le plus intéressant — à chaque rafale de 8 récurrences avant de passer dans le circuit de logique de seuil 27, objet de la figure 8, qui permet d'établir la carte du clutter d'échos fixes, à chaque tour d'antenne. Grâce à cette carte, on peut distinguer les avions ayant une vitesse radiale nulle ou quasi nulle. En sortie de ces deux types de logique de seuil on choisit l'écho présentant le plus haut niveau dans le circuit 28 et correspondant ainsi à la cible intéressante.

On va étudier plus en détail les différents éléments énoncés ci-dessus et constituant dans leur ensemble le dispositif de traitement selon l'invention.

Tout d'abord, la figure 3 représente la voie classique de réception linéaire 17 des signaux reçus par l'antenne Radar 16. Elle comprend un duplexeur 29, qui associé à l'antenne d'émission réception effectue l'aiguillage entre les signaux émis et les signaux reçus par l'antenne. La chaîne d'émission réception se compose d'un oscillateur local 35 et d'un oscillateur cohérent 32 fournissant une référence de phase ; les signaux issus de ces deux oscillateurs sont mélangés dans le mélangeur 325 et amplifiés dans l'amplificateur à Klystron 30 ; un signal de déclenchement (signal de synchronisation) est appliqué au modulateur 33 qui module en impulsions l'amplificateur à Klystron 30 de façon à générer l'impulsion d'émission. Un amplificateur 31 associé au duplexeur 29 assure l'amplification des signaux reçus par l'antenne ; un mélangeur 34 reçoit d'une part le signal issu de l'amplificateur 31 et d'autre part le signal issu de l'oscillateur local 35 et réalise ainsi la transposition du signal à la fréquence intermédiaire. Des détecteurs amplitude phase 36 associés à l'oscillateur cohérent 32 permettent de démoduler le signal Radar sous forme de deux vidéos bipolaires $I = A \sin \varphi$ et $Q = A \cos \varphi$ où A représente l'amplitude du signal reçu et où $\varphi$ représente la phase entre l'onde émise et l'onde reçue, phase qui varie d'une récurrence à la suivante lorsque l'onde est réfléchie par une cible mobile.

La figure 4 représente l'opérateur de rotation qui permet de cadrer les voies vitesses dans l'opérateur

4

**0 044 235**

de Fourier de façon à ce que les voies vitesses $F_3$, $F_4$, $F_5$, $F_6$ assurent la détection des cibles de vitesse radiale non nulle tout en assurant une réjection correcte des échos à vitesse radiale nulle ou quasi nulle. Les signaux issus de cet opérateur de rotation sont appliqués à l'opérateur de pondération (figure 6) qui permet de réduire le niveau des lobes secondaires en sortie de la transformé de Fourier.

Ces deux opérateurs — Rotation, Pondération — permettent une utilisation optimale de la transformée de Fourier et permettent ainsi de s'affranchir du préfiltrage MTI (annulateur MTI) tel qu'il est réalisé dans le système MTD, ou dans le système décrit dans la demande de brevet français publiée sous le n° 2 306 453.

Dans le traitement MTD, le préfiltrage (annulateur MTI) est en effet indispensable pour obtenir une réjection des échos à vitesse radiale nulle ou quasi nulle ; ce préfiltrage est rendu nécessaire par le niveau élevé des lobes secondaires qui subsistent après la pondération telle qu'elle est réalisée dans le domaine fréquentiel.

L'opérateur de rotation tel qu'il est réalisé dans la présente invention effectue un décalage d'un demi-filtre, c'est-à-dire qu'il décale les deux composantes I = A sin $\varphi$ et Q = A cos $\varphi$ d'un angle égal à $\pi/8$ par rapport à leur axe de référence ; les opérations suivantes sont réalisées dans chaque rafale de 8 récurrences :

$$I' = I \cos n(\pi/8) - Q \sin n(\pi/8)$$

et :

$$Q' = I \sin n(\pi/8) + Q \cos n(\pi/8)$$

n étant le numéro de la récurrence de la rafale, variant de 0 à 7 et étant délivré par le module de synchronisation 19.

Cet opérateur de rotation est constitué de quatre multiplieurs 38i, i variant de 1 à 4, multipliant les signaux I et Q par cos n($\pi/8$) et sin n($\pi/8$), et de deux additionneurs $39_1$ et $39_2$ délivrant les signaux I' et Q'.

Sur la figure 6 est représenté l'opérateur de pondération réalisant la pondération temporelle avant transformée de Fourier, cet opérateur ayant pour but de minimiser le niveau des lobes secondaires apportés par l'opérateur de transformée de Fourier. La pondération choisie est une pondération de Dolf Tchebicheff qui permet d'obtenir des lobes secondaires à moins de 50 dB du lobe principal, et ayant tous le même niveau, comme le montre la figure 5. Ainsi, le clutter d'échos fixes est totalement éliminé dans les voies vitesse centrales sans avoir à utiliser de filtrage MTI.

Cet opérateur de pondération est constitué de deux multiplicateurs 40 multipliant les signaux I' et Q' par des coefficients $A_n$ de pondération variables pour chaque récurrence d'une rafale et délivrés par le module de synchronisation 19.

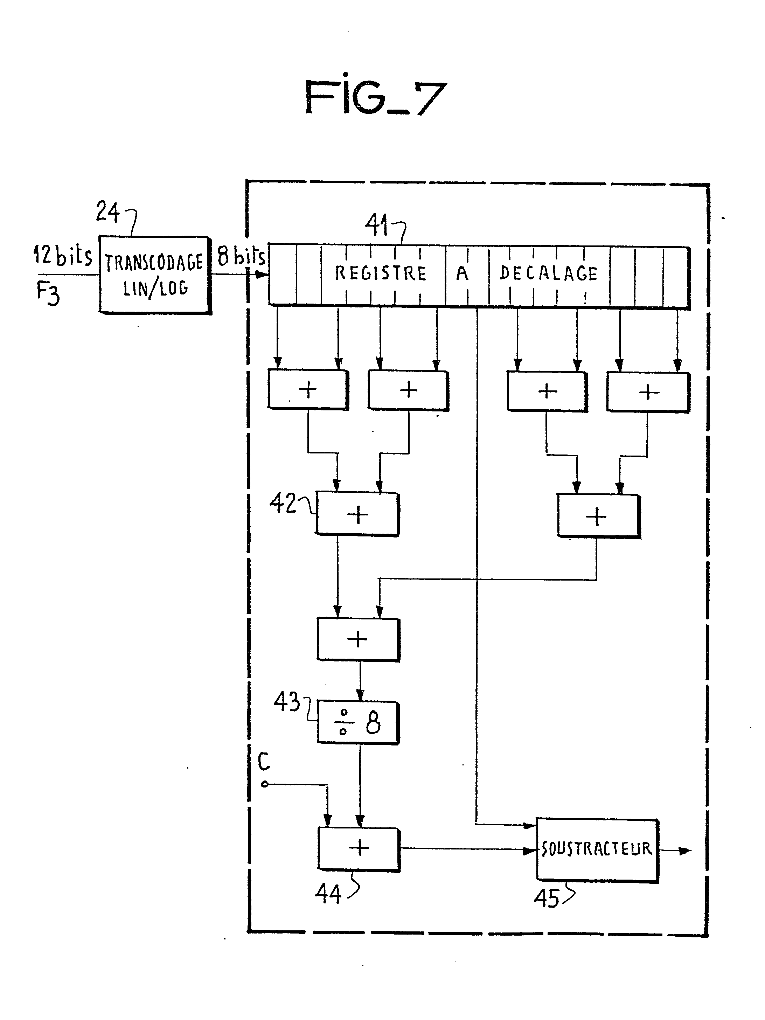

La figure 7 représente le schéma d'un dispositif classique de logique de seuil du type « seuil en distance » appliqué à chacune des 4 voies vitesse centrées $F_3$ à $F_6$. Ce dispositif comprend un registre à décalage 41 stockant les informations de 17 cases distance, deux cases distance correspondant à un écho ponctuel.

La moyenne des informations contenues dans les 16 cases distance situées de part et d'autre de la case distance centrale est obtenue par un jeu de 7 additionneurs 42 et un circuit 43 diviseur par 8. Cette moyenne est majorée par une constante additionnelle C, dans un circuit additionneur 44, puis comparée à l'information provenant de la case distance centrale dans un soustracteur 45. Si la différence obtenue en sortie de ce circuit 45 est nulle, les informations contenues dans les cases distance correspondent à un écho étendu en distance. Par contre, si la différence est positive, les informations correspondent à un écho ponctuel dont l'amplitude est supérieure à celle d'un écho étendu en distance et permettent de déterminer la présence d'une cible mobile intéressante.

Le dispositif de logique de seuil de tour d'antenne à tour d'antenne 27 utilisé pour les voies $F_1$, $F_2$, $F_7$ et $F_8$ est représenté sur la figure 8. Ce dispositif qui est du type intégrateur du premier ordre sans gain de boucle est réalisé à l'aide d'une mémoire de masse 46 permettant de réaliser l'intégration de tour d'antenne à tour d'antenne. Ce dispositif reçoit, en entrée, le signal de sortie du circuit 26 de choix de la plus grande valeur parmi les signaux issus des quatre voies vitesse $F_1$, $F_2$, $F_7$ et $F_8$ et délivre, en sortie, un signal représentant la moyenne de l'environnement d'échos fixes, permettant ainsi d'établir la carte du clutter d'échos fixes, à chaque tour d'antenne.

Pour rendre cette intégration possible, un asservissement est réalisé de façon à être maître de la position de l'antenne, de tour d'antenne à tour d'antenne, et est décrit dans la figure 9. Comme cela a été dit auparavant, on utilise la plus grande valeur disponible sur les quatre voies $F_1$, $F_2$, $F_7$ et $F_8$ déterminée par le circuit 26 avant de réaliser le seuil. Mais selon une variante, on peut placer quatre intégrateurs de tour à tour sur chaque voie séparément.

La figure 9 représente le schéma synoptique d'un système d'asservissement de la position de l'antenne radar. Dans les radars classiques, la vitesse de rotation de l'antenne est totalement indépendante de la période de répétition des impulsions émises. De plus, le type de moteur utilisé, et les coups de vent, ne permettent pas d'être maître de la position exacte de l'antenne à un instant donné. Un

5

« codeur d'antenne » est donc utilisé pour connaître à chaque instant la position de l'antenne. Ce mode de fonctionnement est une contrainte gênante pour réaliser le traitement radar de tour d'antenne à tour d'antenne. Selon la présente invention, un système d'asservissement de la position de l'antenne est réalisé afin d'en être maître, de tour d'antenne à tour d'antenne. L'asservissement 47 proprement dit reçoit l'état d'un compteur 48 (valeurs allant de 0 à 6 000 dans l'exemple de réalisation donnée) qui est incrémenté par un signal de période 1 000 μs provenant du module de synchronisation 19. Cet asservissement reçoit du dispositif d'entraînement 49 de l'antenne 16 une indication de mesure de l'antenne et délivre alors un signal de commande du moteur d'entraînement. Ainsi, la position de l'antenne est parfaitement définie de tour à tour.

On a ainsi décrit un système de détection de cibles mobiles, traitant le signal radar dans les domaines temporel et fréquentiel comportant un système de mise en mémoire des informations radar de tour d'antenne à tour d'antenne pour mieux éliminer les échos fixes ponctuels.

**Revendications**

1. Dispositif de détection de cibles mobiles dans un système radar comportant une voie classique de réception linéaire (17) des signaux reçus par l'antenne (16) du radar, délivrant des signaux vidéo bipolaires analogiques, des moyens de conversion (18) de ces signaux en signaux numériques, et un dispositif de traitement numérique des signaux vidéo bipolaires dans les domaines temporel et fréquentiel sur huit voies vitesse différentes $F_1$ à $F_8$, caractérisé en ce qu'il comporte deux dispositifs d'élimination des échos parasites, l'un comprenant un circuit de logique de seuil de distance (25), appliqué aux quatre voies vitesse centrales $F_3$ à $F_6$ et éliminant les échos parasites à vitesse de déplacement faible étendus en distance et l'autre (270) appliqué aux quatre voies vitesse extrêmes $F_1$, $F_2$, $F_7$ et $F_8$ comprenant :
un circuit (26) de choix de la plus grande valeur disponible sur ces quatre voies,
un circuit de logique de seuil de tour d'antenne à tour d'antenne (27) utilisant une mémoire de masse (46) qui permet de réaliser un intégrateur de tour d'antenne à tour d'antenne, permettant d'éliminer les échos fixes même ponctuels.

2. Dispositif selon la revendication 1, caractérisé en ce que le dispositif de traitement numérique des signaux vidéo bipolaires dans les domaines temporel et fréquentiel comprend :
un opérateur de rotation (20) faisant tourner les axes de référence des signaux vidéo d'un angle de valeur déterminée, égale à π/8 ;
un opérateur de pondération (21), traitant dans le domaine temporel les signaux issus de l'opérateur de rotation (20) ;
un dispositif de deux mémoires tampon (22), mémorisant alternativement une rafale sur deux émises par le radar ;
un opérateur de transformée de Fourier (24) effectuant la transformée de Fourier des signaux vidéo sur huit voies de vitesse différente $F_1$ à $F_8$.

3. Dispositif selon la revendication 1, caractérisé en ce que le dispositif d'élimination des échos parasites fixes comprend un circuit de logique de seuil constitué par quatre intégrateurs de tour d'antenne à tour d'antenne sur chacune des quatre voies $F_1$, $F_2$, $F_7$, $F_8$ séparément.

4. Dispositif selon la revendication 2, caractérisé en ce que l'opérateur de rotation (20) est constitué par quatre multiplicateurs (381 à 384) multipliant à chaque récurrence les signaux vidéo par (cos n(π/8)) et (sin n(π/8)), n étant le numéro de la récurrence de la rafale délivrée par un module de synchronisation (19) et par deux additionneurs ($39_1$ et $39_2$).

5. Dispositif selon la revendication 2, caractérisé en ce que l'opérateur de pondération (21) est constitué par deux multiplicateurs (40) multipliant les signaux issus de l'opérateur de rotation (20) par des coefficients $A_n$ de pondération variables pour chaque récurrence d'une rafale et délivrés par un module de synchronisation (19).

6. Dispositif selon la revendication 1, caractérisé en ce qu'il comporte un système d'asservissement de position de l'antenne (16) du radar, recevant des informations d'une part d'un compteur (48) commandé par un module de synchronisation (19) et d'autre part du système d'entraînement (49) de l'antenne (16) et commandant ce dernier système afin de permettre une meilleure élimination des échos fixes de tour d'antenne à tour d'antenne.

7. Radar de surveillance comportant un dispositif de détection de cibles mobiles selon l'une des revendications 1 à 6.

**Claims**

1. Device for the detection of movable targets in a radar system comprising a conventional linear reception channel (17) for the signals received from the radar antenna (16), supplying analog bipolar video signals, means (18) for the conversion of these signals into digital signals and a device for the digital processing of the bipolar video signals in the time and frequency domains on eight different speed

**0 044 235**

channels $F_1$ to $F_8$, characterized in that it comprises two devices for the elimination of clutter echos, one of these devices comprising a distance threshold logic circuit (25) connected to the four central speed channels $F_3$ to $F_6$ and eliminating the clutter echos at reduced moving speed and extended distance, the other (270) being connected to the four outer speed channels $F_1$, $F_2$, $F_7$ and $F_8$ and comprising :

a circuit (26) for the selection of the largest value available on these four channels,

an antenna turn to antenna turn threshold logic circuit (27) using a mass memory (46) allowing to perform an integration from antenna turn to antenna turn to eliminate even punctual fixed echos.

2. Device according to claim 1, characterized in that the device for the digital processing of the bipolar video signals in the time and frequency domains comprises :

a rotation operator (20) for turning the reference axes of the video signals through an angle of determined value equal to $\pi/8$ ;

a weighting operator (21) processing the signals supplied from the rotation operator (20) in the time domain ;

a device with two buffer memories (22) alternatingly storing one out of two sequences transmitted by the radar ;

a Fourier transform operator (24) providing the Fourier transform of the video signals on eight different speed channels $F_1$ to $F_8$.

3. Device according to claim 1, characterized in that the device for the elimination of fixed clutter echos comprises a threshold logic circuit formed of four integrators for integrating from antenna turn to antenna turn on each of the four channels $F_1$, $F_2$, $F_7$, $F_8$ separately.

4. Device according to claim 2, characterized in that the rotation operator (20) is formed of four multipliers ($38_1$ to $38_4$) multiplying at each recurrence the video signals by (cos $n(\pi/8)$) and (sin $n(\pi/8)$), n being the number of the recurrence of the sequence as supplied by a synchronization module (19) and by two adders ($39_1$ and $39_2$).

5. Device according to claim 2, characterized in that the weighting operator (21) is formed of two multipliers (40) multiplying the signals from the rotation operator (20) by weighting coefficients $A_n$ which are variable for each recurrence of a sequence and supplied by a synchronization module (19).

6. Device according to claim 1, characterized in that it comprises a radar antenna (16) position control system receiving information from a counter (48) controlled by a synchronization module (19) on the one hand and from the driving system (49) of the antenna (16) on the other hand, and controlling the latter system in order to permit a better elimination of the fixed echos from antenna turn to antenna turn.

7. Surveillance radar comprising a device for the detection of movable targets according to any of claims 1 to 6.

**Ansprüche**

1. Vorrichtung zur Erfassung von beweglichen Zielen in einem Radarsystem mit einem herkömmlichen linearen Empfangsweg (17) für die von der Radarantenne (16) empfangenen Signale, der analoge bipolare Videosignale abgibt, Mitteln (18) zur Umsetzung dieser Signale in Digitalsignale und einer Vorrichtung zur digitalen Verarbeitung der bipolaren Videosignale im Zeitbereich und im Frequenzbereich für acht verschiedene Geschwindigkeiten $F_1$ bis $F_8$, dadurch gekennzeichnet, daß sie zwei Vorrichtungen zur Eliminierung von Störechos enthält, von denen die eine eine logische Entfernungsschwellwert-Schaltung (25) enthält, die an vier zentrale Geschwindigkeitskanäle $F_3$ bis $F_6$ angeschlossen ist und die Störechos mit geringer Bewegungsgeschwindigkeit und großer Ausdehnung in der Entfernung eliminiert, und die andere (270), welche an die vier äußersten Geschwindigkeitskanäle $F_1$, $F_2$, $F_7$ und $F_8$ angeschlossen ist, enthält :

eine Schaltung (26) zum Auswählen des größten Wertes unter den an diesen vier Kanälen verfügbaren Werten,

eine Antennenumdrehung-zu-Antennenumdrehung-Logik-Schaltung (27), in der von einem Massenspeicher (46) Gebrauch gemacht wird, der es ermöglicht, einen Integrator zum Integrieren von Antennenumdrehung zu Antennenumdrehung zu verwirklichen, um selbst punktförmige Festechos zu eliminieren.

2. Vorrichtung nach Anspruch 1, dadurch gekennzeichnet, daß die Vorrichtung zur digitalen Verarbeitung der bipolaren Videosignale im zeitlichen Bereich und im Frequenzbereich umfaßt :

einen Rotationsoperator (20), welcher die Bezugsachsen der Videosignale um einen Winkel bestimmten Wertes verdreht, der gleich $\pi/8$ ist ;

einen Wichtungsoperator (21), welcher die von dem Rotationsoperator (20) abgegebenen Signale im zeitlichen Bereich verarbeitet ;

eine Vorrichtung mit zwei Pufferspeichern (22) zum abwechselnden Speichern jeder zweiten von dem Radargerät gesendeten Impulssalve ;

einen Fouriertransformationsoperator (24), der die Fouriertransformierte der Videosignale auf den acht verschiedenen Geschwindigkeitskanälen $F_1$ bis $F_8$ bildet.

3. Vorrichtung nach Anspruch 1, dadurch gekennzeichnet, daß die Vorrichtung zur Eliminierung von Störechos eine Schwellwert-Logik-Schaltung umfaßt, die aus vier Integratoren zum Integrieren von

**0 044 235**

Antennenumdrehung zu Antennenumdrehung getrennt auf jedem der vier Kanäle $F_1$, $F_2$, $F_7$, $F_8$ gebildet ist.

4. Vorrichtung nach Anspruch 2, dadurch gekennzeichnet, daß der Rotationsoperator (20) aus vier Multiplikatoren ($38_1$ bis $38_4$) gebildet ist, welche in jeder Wiederholungsfolge die Videosignale mit (cos $n(\pi/8)$) und (sin $n(\pi/8)$) multiplizieren, worin n die Wiederholungsfolge der Impulssalve ist und von einem Synchronisationsmodul (19) sowie von zwei Addierern ($39_1$ und $39_2$) abgegeben wird.

5. Vorrichtung nach Anspruch 2, dadurch gekennzeichnet, daß der Wichtungsoperator (21) aus zwei Multiplikatoren (40) gebildet ist, welche die von dem Rotationsoperator (20) abgegebenen Signale mit Koeffizienten $A_n$ multiplizieren, bei denen es sich um Wichtungskoeffizienten handelt, die für jede Wiederholungsfolge einer Impulssalve variabel sind und von einem Synchronisationsmodul (19) abgegeben werden.

6. Vorrichtung nach Anspruch 1, dadurch gekennzeichnet, daß sie ein Positionsnachführsystem für die Radarantenne (16) enthält, welches Informationen einerseits von einem Zähler (48) empfängt, der durch einen Synchronisationsmodul (19) gesteuert wird, und andererseits von dem Antriebssystem (49) der Antenne (16) empfängt, und welches dieses letztgenannte System so steuert, daß eine bessere Unterdrückung der Festechos von Antennenumdrehung zu Antennenumdrehung erreicht wird.

7. Überwachungsradar mit einer Vorrichtung zur Erfassung von beweglichen Zielen nach einem der Ansprüche 1 bis 6.

8

# FIG_1

FIG_2

# FIG_3

## FIG_4

## FIG_6

## FIG_8

4

# FIG_5

# FIG_7

# FIG_9

19 ─┐

MODULE SYNCHRONISATION

48 ─┐

COMPTEUR

16 ─┐

47 ─┐

ASSERVISSEMENT

49 ─┐

SYSTEME D'ENTRAINEMENT

MESURE POSITION

COMMANDE MOTEUR